(19) Europäisches Patentamt / European Patent Office / Office européen des brevets

(11) **EP 2 754 088 B1**

(12) **FASCICULE DE BREVET EUROPEEN**

(45) Date de publication et mention
de la délivrance du brevet:
**17.12.2014 Bulletin 2014/51**

(21) Numéro de dépôt: **12756463.1**

(22) Date de dépôt: **06.09.2012**

(51) Int Cl.:
**G06K 9/62** *(2006.01)*        **G06K 9/46** *(2006.01)*
**G06K 9/00** *(2006.01)*

(86) Numéro de dépôt international:
**PCT/EP2012/067444**

(87) Numéro de publication internationale:
**WO 2013/034654 (14.03.2013 Gazette 2013/11)**

(54) **IDENTIFICATION PAR RECONNAISSANCE D'IRIS**

IDENTIFIKATION DURCH IRIS-ERKENNUNG

IDENTIFICATION THROUGH IRIS RECOGNITION

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **06.09.2011 FR 1157895**

(43) Date de publication de la demande:
**16.07.2014 Bulletin 2014/29**

(73) Titulaire: **Morpho**
**92130 Issy-les-Moulineaux (FR)**

(72) Inventeur: **BOHNÉ, Julien**
**92130 Issy-Les-Moulineaux (FR)**

(74) Mandataire: **Regimbeau**
**20, rue de Chazelles**
**75847 Paris Cedex 17 (FR)**

(56) Documents cités:
**WO-A2-2007/103698**

• **WENBO DONG ET AL: "Iris Matching Based on
Personalized Weight Map", IEEE
TRANSACTIONS ON PATTERN ANALYSIS AND
MACHINE INTELLIGENCE, IEEE SERVICE
CENTER, LOS ALAMITOS, CA, US, vol. 33, no. 9,
1 septembre 2011 (2011-09-01), pages 1744-1757,
XP011409140, ISSN: 0162-8828, DOI:
10.1109/TPAMI.2010.227**
• **HOLLINGSWORTH K P ET AL: "The Best Bits in
an Iris Code", IEEE TRANSACTIONS ON
PATTERN ANALYSIS AND MACHINE
INTELLIGENCE, IEEE SERVICE CENTER, LOS
ALAMITOS, CA, US, vol. 31, no. 6, 1 juin 2009
(2009-06-01), pages 964-973, XP011266637, ISSN:
0162-8828, DOI: 10.1109/TPAMI.2008.185**
• **DAUGMAN J: "How Iris Recognition Works",
IEEE TRANSACTIONS ON CIRCUITS AND
SYSTEMS FOR VIDEO TECHNOLOGY, IEEE
SERVICE CENTER, PISCATAWAY, NJ, US, vol.
14, no. 1, 1 janvier 2004 (2004-01-01), pages 21-30,
XP011105913, ISSN: 1051-8215, DOI:
10.1109/TCSVT.2003.818350**

**Description**

DOMAINE DE L'INVENTION

L'invention concerne de manière générale le domaine de la biométrie, et en particulier le domaine de l'identification d'individus par reconnaissance d'iris.

ETAT DE LA TECHNIQUE

On connaît déjà des méthodes d'identification par reconnaissance d'iris, consistant à capturer une image d'un iris d'un individu à identifier avec une ou plusieurs images d'iris connues et stockées dans une base de données ou sur un document d'identité sécurisé.

En particulier, John Daugman a développé une méthode de reconnaissance d'iris, décrite dans le document US 5,291,560, comprenant les étapes consistant à :

- coder des images d'iris à comparer en un code binaire dont les bits correspondent à des zones identifiées des iris,
- appliquer un masque à ces codes binaires pour supprimer les bits correspondants à des zones de l'iris non visibles (par exemple qui sont cachées par la paupière)
- confronter deux codes binaires d'images d'iris pour en déduire un code binaire recensant les bits cohérents entre deux codes binaires d'iris, et
- à partir de ce code, calculer la distance de Hamming, c'est-à-dire le nombre de bits incohérents entre les codes binaires d'iris à comparer.

Plus un couple de codes binaires d'images d'iris obtient une distance de Hamming faible, et plus les chances que les deux images dont ils sont extraits proviennent du même iris sont importantes.

Cette méthode est désormais classique pour l'homme du métier, et la plupart des développements qui ont suivi visent à améliorer la façon de coder des images d'iris, afin que les traitements réalisés sur ces codes binaires soient les plus pertinents possibles. Peu de développements ont visé à améliorer la méthode de confrontation entre plusieurs codes binaires d'iris pour en déduite l'identité du porteur de l'iris testé.

Néanmoins on constate d'une part que la méthode de Daugman utilisant la distance de Hamming commet toujours des erreurs positives, consistant à considérer à tort que deux images différentes proviennent du même iris, et des erreurs négatives, consistant à considérer à tort que deux images du même iris proviennent de deux iris différents.

PRESENTATION DE L'INVENTION

En conséquence, l'un des buts de l'invention est de diminuer à la fois les taux d'erreurs positives et négatives atteints dans l'art antérieur. En particulier, un objectif de l'invention est de diminuer le taux d'erreurs négatives à taux d'erreurs positives fixé.

L'invention propose une méthode alternative d'identification par reconnaissance d'iris, exploitant les densités locales de bits cohérents entre deux codes binaires représentatifs d'images d'iris.

A cet effet, l'invention propose une méthode d'identification à partir de données biométriques d'un iris d'un oeil à identifier, comprenant les étapes consistant à :

- coder une image de l'iris à identifier et une deuxième image d'iris pour obtenir des codes binaires représentatifs des images à comparer, tels que des bits adjacents des codes binaires correspondent à des zones adjacentes des iris sur les images correspondantes,
- déterminer un code binaire de similarité à partir du code binaire de l'image de l'iris à identifier et du deuxième code binaire de la deuxième image d'iris,
- déterminer un score de confiance fonction de densités locales de similarités entre les deux images d'iris comparées, ainsi que du code binaire de similarité, les densités locales de similarité étant elles-mêmes déterminées en fonction du code binaire de similarité,
- décider, en fonction de la valeur du score de confiance, si les deux images d'iris proviennent du même iris.

La méthode d'identification proposée par l'invention peut en outre comprendre au moins l'une des caractéristiques suivantes :

- le code binaire de similarité est une carte de cohérence obtenue en appliquant entre les deux codes binaires représentatifs des images d'iris l'opérateur « ou exclusif ».

- le code binaire de similarité utilisé ne prend en compte que les bits de la carte de cohérence correspondants à des zones des iris visibles sur les images.
- pour déterminer le score de confiance, on calcule, pour chaque bit du code binaire de similarité, une mesure de densité locale de bits cohérents entre les deux codes binaires des images d'iris dans un voisinage du bit considéré.
- Le score de confiance est calculé en sommant, pour chaque bit du code de similarité, les valeurs des densités locales pondérées d'un nombre positif si le bit est cohérent entre les deux images d'iris, et d'un nombre négatif si le bit est incohérent entre les deux images d'iris.
- La méthode comprend le fait de normaliser le score de confiance obtenu en le divisant par la somme des densités locales.
- La méthode consiste à itérer les étapes précédentes entre un code d'une image d'un iris à identifier et N codes d'images d'iris d'une base de données, et à partir des scores de confiance obtenus pour chaque couple de codes d'images d'iris, déterminer un taux de succès de la décision effectuée concernant la provenance des images.
- La méthode comprend l'application des étapes précédentes entre un code d'une image d'un iris à identifier et des codes d'images d'iris d'une base de données, et la détermination, à partir des scores de confiance obtenus des images d'iris de la base de données qui proviennent de l'iris à identifier. On peut en outre comparer les scores de confiance obtenus à un seuil pour déterminer les images d'iris qui proviennent de l'iris à identifier.
- La méthode consiste à :

  - déterminer un code binaire de similarité entre une image d'iris à identifier et chacune de N images d'iris d'une base de données,
  - calculer, pour chaque code binaire de similarité, la distance de Hamming entre les deux images comparées,
  - sélectionner parmi la base de données de N images une deuxième base de données de N' images des iris présentant la distance de Hamming la plus faible avec l'image de l'iris à identifier et,
  - mettre en oeuvre la méthode précédemment décrite sur la base de données contenant les N' images d'iris.

L'invention concerne en outre un système d'identification d'un individu, comprenant :

- au moins un système d'acquisition, adapté pour capturer au moins une image d'un iris d'une personne,
- une plateforme de calcul, recevant l'image acquise par le système d'acquisition et au moins une deuxième image à comparer à la première,

la plateforme de calcul étant adaptée pour :

- coder l'image de l'iris à identifier et la deuxième image d'iris pour obtenir des codes binaires représentatifs des images à comparer, tels que des bits adjacents des codes binaires correspondent à des zones adjacentes des iris sur les images correspondantes,
- déterminer un code binaire de similarité à partir du code binaire de l'image de l'iris à identifier et du deuxième code binaire de la deuxième image d'iris,
- déterminer un score de confiance fonction de densités locales de similarités entre les deux images d'iris comparées, ainsi que du code binaire de similarité, les densités locales de similarité étant elles-mêmes déterminées en fonction du code binaire de similarité,
- décider, en fonction de la valeur du score de confiance, si les deux images d'iris proviennent du même iris.

## DESCRIPTION DES FIGURES

D'autres caractéristiques, buts et avantages de la présente invention apparaîtront à la lecture de la description détaillée qui va suivre, au regard des figures annexées, données à titre d'exemples non limitatifs et sur lesquelles :

- la figure 1 illustre un exemple de mise en situation de la reconnaissance d'iris.
- la figure 2 représente les principales étapes de la méthode d'identification proposée par l'invention
- la figure 3 représente schématiquement l'équivalence entre un code binaire d'iris et une image d'iris.

## DESCRIPTION DETAILLEE DE L'INVENTION

La méthode de l'art antérieur décrite ci-avant ne tient pas compte des positions sur l'image des bits incohérents entre les codes binaires des images d'iris.

Or, certaines images peuvent contenir un reflet ou un corps étranger sur une zone de l'iris, et les bits de ces zones peuvent présenter de nombreuses différences avec les bits correspondants sur une image différente mais provenant du même iris.

Par conséquent, il est plus probable qu'un couple de codes binaires provienne du même iris si les bits cohérents (respectivement les bits cohérents) sont concentrés dans quelques zones plutôt que s'ils sont répartis dans toute l'image. La méthode proposée par l'invention tient compte de cet élément et exploite les densités locales de bits cohérents entre des couples de codes binaires pour identifier un iris.

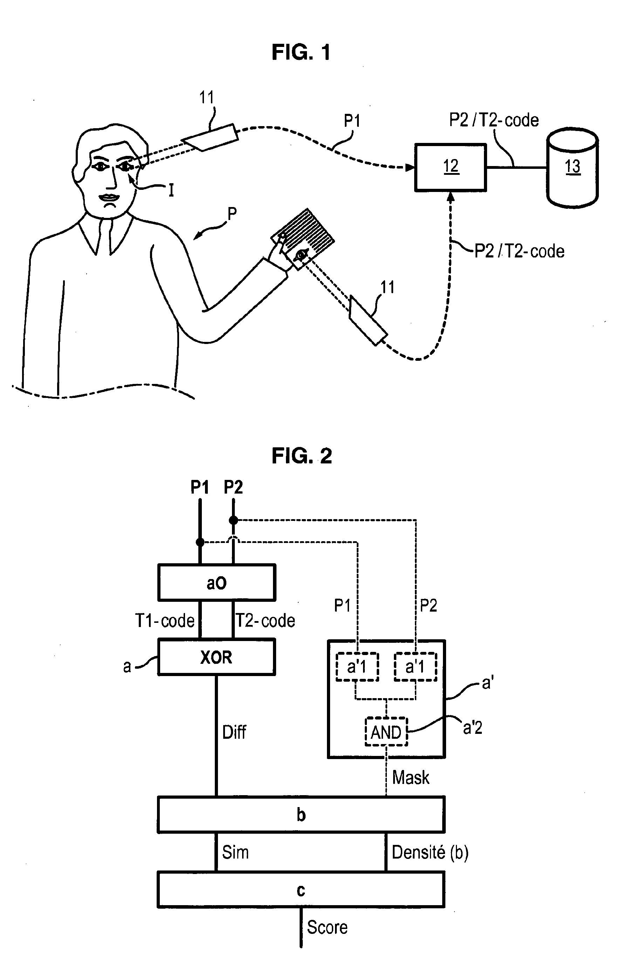

En référence à la figure 1, est représentée une mise en situation de l'invention.

Une personne P doit être identifiée, par exemple avant d'être autorisée à entrer dans un lieu sécurisé. L'identification repose sur la reconnaissance d'un iris I de la personne P.

Pour ce faire, un système d'acquisition 11 tel qu'une caméra ou un appareil photo prend une image P1 de l'iris I de la personne P. L'image prise par la caméra ou l'appareil photo doit présenter une résolution suffisante pour être exploitable pour faire de la reconnaissance d'iris. Par exemple, une résolution suffisante est de l'ordre d'au moins 80 pixels dans un rayon d'iris sur l'image P1. D'autres conditions sur l'image et le système d'acquisition sont connues de l'homme de l'art.

L'image P1 est envoyée à une plateforme de calcul 12 afin d'être traitée. En particulier, la plateforme de calcul 12 compare l'image P1 à un une autre image P2, provenant soit d'un ensemble d'images d'une base de données 13, soit d'une image d'un iris de la personne (le même iris que celui dont l'image est prise par le système d'acquisition 11) figurant sur un document d'identité sécurisé de la personne. Cette image peut dans ce dernier cas être scannée ou récupérée par tout système d'acquisition 11 connu (par exemple caméra, scanner, appareil photo, etc.) et envoyé à la plateforme de calcul 12.

C'est la plateforme de calcul 12 qui met en oeuvre la méthode d'identification selon l'invention et permet de déterminer l'identité de la personne.

On va maintenant décrire la méthode d'identification selon l'invention, dont les principales étapes sont représentées en figure 2.

### a0. Codage des images d'iris

Quand la plateforme de calcul 12 a reçu l'image P1 provenant directement de la personne P, elle lance un algorithme de codage pour obtenir un code binaire *T1_code* représentatif de l'image P1.

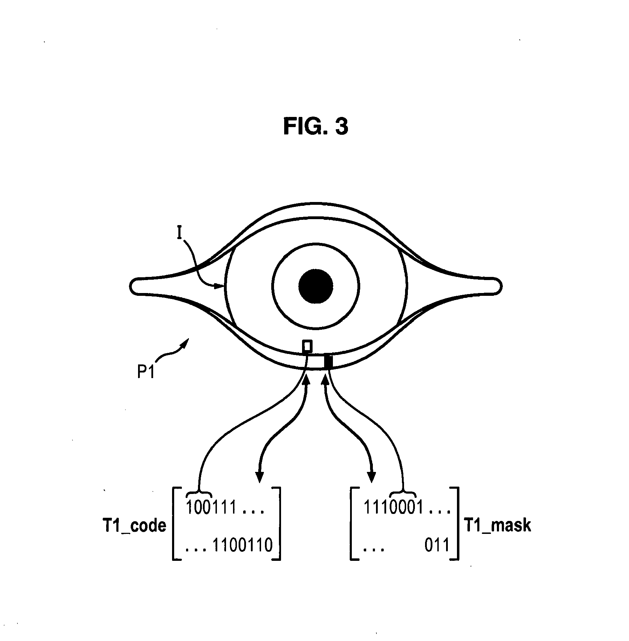

Comme représenté schématiquement en figure 3, chaque bit du code binaire *T1_code* correspond à une zone de l'iris I de la personne P, et les bits du code adjacents à celui-ci correspondent à des zones adjacentes à cette zone.

En outre, la valeur de chaque bit correspond à la description d'une petite zone de l'iris, et peut être obtenue par exemple par application d'un filtre de Gabor ou d'une transformée en cosinus discrète sur la zone considérée.

Le codage en lui-même est une technique connue de l'homme du métier et ne sera donc pas décrite plus en détail ici. On pourra se référer par exemple à l'article de Daugman How Iris Recognition Works (IEEE Transactions on Circuits and Systems for Video Technology, Vol. 14, No 1, January 2004).

La deuxième image d'iris P2, à laquelle est confrontée la première P1, peut être extraite de la base de données 13, ou être envoyée par un système d'acquisition 11 à la plateforme de calcul 12.

Elle peut être codée par la plateforme de calcul 12 quand celle-ci la reçoit, selon le même codage que pour la première image P1, afin d'obtenir un code binaire *T2_code* représentatif de la deuxième image d'iris P2. Alternativement, la deuxième image d'iris P2 peut être stockée sous forme du code binaire *T2_code* dans la base de données 13 ou dans un document d'identité, et le cas échéant être envoyée sous cette forme par le système d'acquisition 11.

### a. *Elaboration d'un code binaire de similarité*

Une fois que la plateforme de calcul 12 dispose des deux codes binaires *T1_code* et *T2_code* représentatifs des images d'iris P1 et P2, à comparer, elle met en oeuvre un algorithme qui compare les codes binaires pour en déduire un code binaire de similarité *Sim* entre les deux codes.

Ce code *Sim* est calculé à partir d'une carte de cohérence *Diff,* obtenue en effectuant l'opération binaire « Ou exclusif » (XOR) entre les deux codes binaires d'images d'iris, c'est-à-dire que si deux bits correspondants dans les deux codes *T1_code* et *T2_*code ont la même valeur, le bit correspondant sur la carte de cohérence *Diff* est à 0. En d'autres termes, les 1 de la carte de cohérence *Diff* correspondent aux différences entre les bits correspondants des codes binaires des images d'iris.

Formellement, on calcule: $Diff = T1\_code \text{ XOR } T2\_code.$

### a'. *Calcul d'un masque des zones de l'iris non visibles*

On peut utiliser cette carte de cohérence *Diff* directement en tant que code de similarité *Sim*. Alternativement, on peut extraire de cette carte *Diff* tous les bits correspondant à des zones de l'iris non visibles sur l'une ou l'autre des images P1 et P2. Ces zones correspondent la plupart du temps à des zones cachées par les paupières.

Pour cela, la plateforme de calcul 12 peut, au cours d'une étape a'1, extraire des images P1 et P2, un masque respectif *T1_Mask* et *T2_mask* dont les bits à 1 correspondent à des zones de l'iris visibles sur les images respectives P1 et P2, comme schématiquement illustré en figure 3.

A partir de ces masques *T1_Mask* et *T2_Mask*, la plate-forme de calcul 12 détermine, au cours d'une étape a'2, un code binaire de masquage *Mask* dont les bits à 1 correspondent à l'intersection des zones visibles des deux iris sur les images P1 et P2, c'est-à-dire à l'intersection des masques respectifs *T1_Mask* et *T2_Mask*.

Formellement, on calcule *Mask = T1_Mask AND T2_Mask.*

On ne prend ensuite en compte que les bits cohérents entre les codes binaires *T1_code* et *T2_code,* c'est-à-dire les bits à 0 dans la carte de cohérence *Diff,* et qui de surcroît ne sont pas masqués. Au contraire on ne tient pas compte de la valeur des bits masqués lors des opérations subséquentes du procédé.

Le code de similarité *Sim* est donc la carte de cohérence *Diff,* dans laquelle on ne prend en compte que les bits non masqués, et qui sont indiqués par le code de masquage *Mask*.

b. *Calcul des densités locales de bits cohérents*

Comme mentionné précédemment, pour calculer un score de correspondance entre deux images d'iris, on prend en compte les densités locales de bits cohérents entre les codes binaires correspondant.

Dans toute la suite, l'algorithme est effectué sur les bits b du code binaire de similarité *Sim.*

On peut envisager plusieurs manières de calculer des densités locales de bits cohérents. Par exemple, la plateforme de calcul 12 peut mettre en oeuvre une méthode d'estimation par noyau, avec un noyau classique, par exemple gaussien.

Alternativement, la densité locale de bits cohérents autour d'un bit peut être calculée en définissant un voisinage du bit considéré et en appliquant la formule suivante :

$$\text{densité(b)} = \frac{\text{nombre de bits non masqués à 0 dans le voisinage de } b}{\text{nombre de bits non masqués dans le voisinage de } b},$$

b étant un bit du code binaire de similarité *Sim.*

Le voisinage peut à titre d'exemple non limitatif être défini comme l'ensemble constitué des bits précédents et des bits suivants le bit considéré.

c. *Détermination d'un score de correspondance*

Enfin, la plateforme de calcul 12 peut calculer, à partir des densités locales de bits cohérents du code binaire de similarité *Sim* et des bits cohérents eux-mêmes, un score permettant de déduire si les deux images P1 et P2 proviennent du même iris.

Le score a la définition générale suivante :

$$\text{score} = \frac{\sum_{b \in \text{bit non masqués}} f(b, \text{densité(b)})}{\sum_{b \in \text{bit non masqués}} \text{densité(b)}}$$

Plusieurs définitions sont possibles pour la fonction f.

De préférence, il s'agit d'une fonction pondérant les densités locales calculées au cours de l'étape b. d'un nombre positif si le bit b du code de similarité *Sim* vaut 0 (i.e. que les bits correspondants des codes binaires *T1_code* et *T2_code* sont cohérents), et d'un nombre négatif si le bit b du code de similarité *Sim* vaut 1 (i.e. que les bits correspondants des codes binaires *T1_code* et *T2_code* sont incohérents).

On peut par exemple prendre une fonction telle que :

- **f(b, densité(b)) = densité(b)** si b vaut 0,
- **f(b, densité (b)) = - densité (b)** si b vaut 1.

Enfin le dénominateur du score, bien que non nécessaire pour obtenir un score de confiance représentatif des similarités entre deux images, permet de normaliser celui-ci, de sorte que le score final obtenu est compris entre -1 et 1. On obtient ainsi un référentiel plus pertinent pour comparer plusieurs scores entre couples d'images comparées.

Le score obtenu augmente avec le nombre de bits cohérents entre les deux codes binaires *T1_code* et *T2_*code des images P1 et P2. En outre, il augmente également si les bits cohérents sont rassemblés, car alors les densités locales de bits cohérents augmentent.

Par conséquent, plus le score est important, et plus les chances pour que les deux images d'iris P1 et P2 proviennent du même iris sont grandes.

On peut mettre en oeuvre cet algorithme en le testant pour une base de données d'images d'iris connues, et en déduire un taux de succès pour la décision prise relative à la provenance des images d'iris P1 et P2.

En outre, en testant cet algorithme un grand nombre de fois, on peut en déduire un score de confiance seuil auquel comparer les scores de confiance obtenus par la méthode.

En particulier, pour la formule du score de confiance donnée ci-avant, si le score de confiance obtenu en comparant deux codes d'images d'iris T1_code et T2_code est supérieur à un score seuil, on en déduit que les deux codes proviennent du même iris, avec un taux d'erreur très réduit.

Par exemple, pour un score seuil de 0.3, le taux de faux positif sera d'environ 0.01% à un taux d'erreurs négatives de moins de 3% sur une base de qualité moyenne.

Enfin, pour améliorer la vitesse d'exécution de l'algorithme, dans le cas où l'on compare une image d'iris P1 à un ensemble de N images d'une base de données, on peut aussi le combiner avec l'algorithme mis au point par Daugman.

Cela consiste à calculer, pour chaque couple image d'iris P1/image de la base de données P2, le code binaire de similarité *Diff* puis la distance de Hamming entre les deux codes binaires.

On sélectionne ensuite N' images de la base de données présentant la distance de Hamming la plus faible, c'est-à-dire la similarité la plus grande, avec l'image d'iris P1 à identifier.

Puis, une fois cette présélection réalisée, on peut implémenter l'algorithme décrit ci-avant, comprenant les étapes a. b. et c. entre les N' images sélectionnées et l'image d'iris P1 à identifier. Le score maximal obtenu permet d'identifier la personne dont provient l'image d'iris P1, avec des taux d'erreurs négatives à taux d'erreur positives fixé inférieurs d'environ 15% (en relatif) à ceux obtenus avec la seule utilisation de la distance de Hamming.

L'invention n'est toutefois pas limitée aux situations décrites dans le présent document et peut être mise en oeuvre dans toute autre situation implémentant l'identification par reconnaissance d'iris.

## Revendications

**1.** Méthode d'identification à partir de données biométriques d'un iris (I) d'un oeil à identifier, comprenant les étapes consistant à :

- coder une image (P1) de l'iris (I) à identifier et une deuxième image d'iris (P2) à comparer à la première image (P1), pour obtenir des codes binaires (*T1_code, T2_code*) représentatifs des images à comparer, tels que des bits adjacents des codes binaires (T1_code, T2_code) correspondent à des zones adjacentes des iris sur les images correspondantes (P1, P2),
- déterminer un code binaire de similarité (*Sim*) à partir du code binaire (T1_code) de l'image (P1) de l'iris (I) à identifier et du deuxième code binaire (T2_code) de la deuxième image d'iris (P2),
- déterminer un score de confiance fonction de densités locales de similarités (Densité(b)) entre les deux images d'iris comparées (P1, P2), ainsi que du code binaire de similarité (*Sim*), les densités locales de similarité étant elles-mêmes déterminées en fonction du code binaire de similarité (*Sim*),
- décider, en fonction de la valeur du score de confiance, si les deux images d'iris (P1, P2) proviennent du même iris.

**2.** Méthode d'identification selon la revendication 1, dans laquelle le code binaire de similarité (*Sim*) est une carte de cohérence (*Diff*) obtenue en appliquant entre les deux codes binaires (*T1_code*, *T2_code)* représentatifs des images d'iris (P1, P2) l'opérateur « ou exclusif ».

**3.** Méthode d'identification selon la revendication 2, dans laquelle le code binaire de similarité (*Sim*) utilisé ne prend en compte que les bits de la carte de cohérence (*Diff*) correspondants à des zones des iris visibles sur les images (P1, P2).

**4.** Méthode d'identification selon l'une des revendications précédentes, dans laquelle pour déterminer le score de confiance, on calcule, pour chaque bit du code binaire de similarité (*Sim*), une mesure de densité locale (Densité(b)) de bits cohérents entre les deux codes binaires *(T1_code, T2_*code) des images d'iris (P1, P2) dans un voisinage du bit considéré.

5. Méthode d'identification selon la revendication précédente, dans laquelle le score de confiance est calculé en sommant, pour chaque bit du code de similarité (*Sim*), les valeurs des densités locales (Densité(b)) pondérées d'un nombre positif si le bit est cohérent entre les deux images d'iris (P1, P2), et d'un nombre négatif si le bit est incohérent entre les deux images d'iris (P1, P2).

6. Méthode d'identification selon la revendication précédente, dans laquelle on normalise en outre le score de confiance obtenu en le divisant par la somme des densités locales.

7. Méthode d'identification consistant à itérer les étapes de la méthode selon l'une des revendications précédentes entre un code d'une image d'un iris à identifier et N codes d'images d'iris d'une base de données (13), et à partir des scores de confiance obtenus pour chaque couple de codes d'images d'iris, déterminer un taux de succès de la décision effectuée concernant la provenance des images.

8. Méthode d'identification au cours de laquelle on applique la méthode selon l'une des revendications précédentes entre un code (*T1_code*) d'une image (P1) d'un iris (I) à identifier et des codes (*T2_code*) d'images d'iris (P2) d'une base de données (13), et à partir des scores de confiance obtenus, on détermine les images d'iris (P2) de la base de données (13) qui proviennent de l'iris (I) à identifier.

9. Méthode d'identification selon la revendication 8 dans lequel on compare les scores de confiance obtenus à un seuil pour déterminer les images d'iris (P2) qui proviennent de l'iris (I) à identifier.

10. Méthode d'identification consistant à :

   - déterminer un code binaire de similarité (*Diff*) entre une image (P1) d'iris (I) à identifier et chacune de N images d'iris (P2) d'une base de données (13),
   - calculer, pour chaque code binaire de similarité (*Diff*), la distance de Hamming entre les deux images comparées,
   - sélectionner parmi la base de données (13) de N images une deuxième base de données de N' images des iris présentant la distance de Hamming la plus faible avec l'image (P1) de l'iris (I) à identifier et,
   - mettre en oeuvre la méthode selon les revendications 8 ou 9 sur la base de données contenant les N' images d'iris.

11. Système d'identification d'un individu, comprenant :

   - au moins un système d'acquisition (11), adapté pour capturer au moins une image (P1) d'un iris (I) d'une personne (P),
   - une plateforme de calcul (12), recevant l'image (P1) acquise par le système d'acquisition (11) et au moins une deuxième image (P2) à comparer à la première (P1),

   le système étant **caractérisé en ce que** la plateforme de calcul (12) est adaptée pour :

   - coder l'image (P1) de l'iris (I) à identifier et la deuxième image d'iris (P2) pour obtenir des codes binaires (*T1_code, T2_code*) représentatifs des images à comparer, tels que des bits adjacents des codes binaires (*T1_code, T2_code*) correspondent à des zones adjacentes des iris sur les images correspondantes (P1, P2)
   - déterminer un code binaire de similarité (*Sim*) à partir du code binaire (*T1_code*) de l'image (P1) de l'iris (I) à identifier et du deuxième code binaire (*T2_code*) de la deuxième image d'iris (P2),
   - déterminer un score de confiance fonction de densités locales de similarités (Densité(b)) entre les deux images d'iris comparées (P1, P2), ainsi que du code binaire de similarité (*Sim*), les densités locales de similarité étant elles-mêmes déterminées en fonction du code binaire de similarité (*Sim*),
   - décider, en fonction de la valeur du score de confiance, si les deux images d'iris (P1, P2) proviennent du même iris.

**Patentansprüche**

1. Verfahren zur Identifikation basierend auf biometrischen Daten einer Iris (I) eines zu identifizierenden Auges, die Schritte umfassend, die aus Folgendem bestehen:

   - Codieren eines Bildes (P1) der zu identifizierenden Iris (I) und eines zweiten Irisbildes (P2), das mit dem ersten Bild (P1) verglichen werden soll, um Binärcodes (T1_code, T2_code) zu erhalten, die die zu vergleichenden Bilder repräsentieren, und dies derart, dass benachbarte Bits der Binärcodes (T1_code, T2_code) benachbarten Bereichen der Iriden auf den entsprechenden Bildern (P1, P2) entsprechen,
   - Bestimmen eines Binärcodes für die Gleichartigkeit (Sim) basierend auf dem Binärcode (T1_code) des Bildes (P1) der zu identifizierenden Iris (I) und dem zweiten Binärcode (T2_code) des zweiten Irisbildes (P2),
   - Bestimmen einer Vertrauensbewertungszahl als Funktion von lokalen Dichten von Gleichartigkeiten (Dichte(b)) zwischen den beiden verglichenen Irisbildern (P1, P2), sowie des Binärcodes für die Gleichartigkeit (Sim), wobei die lokalen Dichten von Gleichartigkeiten selbst als Funktion des Binärcodes für die Gleichartigkeit (Sim) bestimmt werden,
   - Entscheiden, als Funktion des Werts der Vertrauensbewertungszahl, ob die beiden Irisbilder (P1, P2) von derselben Iris stammen.

2. Identifikationsverfahren nach Anspruch 1, bei dem der Binärcode für die Gleichartigkeit (Sim) eine Übereinstimmungskarte (Diff) ist, die erhalten wird, indem zwischen den beiden Binärcodes (T1_code, T2_code), die die Irisbilder (P1, P2) repräsentieren, der "Exklusiv-ODER" Operator angewendet wird.

3. Identifikationsverfahren nach Anspruch 2, bei dem der verwendete Binärcode für die Gleichartigkeit (Sim) nur die Bits der Übereinstimmungskarte (Diff) berücksichtigt, die Bereichen der Iriden entsprechen, die auf den Bildern (P1, P2) sichtbar sind.

4. Identifikationsverfahren nach einem der vorhergehenden Ansprüche, bei dem für die Bestimmung der Vertrauensbewertungszahl für jedes Bit des Binärcodes für die Gleichartigkeit (Sim) Folgendes berechnet wird: eine Messung für die lokale Dichte (Dichte(b)) von übereinstimmenden Bits zwischen den beiden Binärcodes (T1_code, T2_code) der Irisbilder (P1, P2) in einer Umgebung des betrachteten Bits.

5. Identifikationsverfahren nach dem vorhergehenden Anspruch, bei dem die Vertrauensbewertungszahl berechnet wird, indem für jedes Bit des Binärcodes für die Gleichartigkeit (Sim) die Werte der lokalen Dichten (Dichte(b)) aufsummiert werden, und dies gewichtet mit einer positiven Zahl, falls das Bit zwischen den beiden Irisbildern (P1, P2) übereinstimmt, und mit einer negativen Zahl, falls das Bit zwischen den beiden Irisbildern (P1, P2) nicht übereinstimmt.

6. Identifikationsverfahren nach dem vorhergehenden Anspruch, bei dem die erhaltene Vertrauensbewertungszahl außerdem normiert wird, indem sie durch die Summe der lokalen Dichten dividiert wird.

7. Identifikationsverfahren, das darin besteht, die Schritte des Verfahrens nach einem der vorhergehenden Ansprüche zu wiederholen, und dies zwischen einem Code eines Bildes einer zu identifizierenden Iris und N Codes von Irisbildern aus einer Datenbasis (13), wobei basierend auf den Vertrauensbewertungszahlen, die für jedes Paar von Codes von Irisbildern erhalten werden, eine Erfolgsrate für die ausgeführte Entscheidung bestimmt wird, die die Herkunft der Bilder betrifft.

8. Identifikationsverfahren, in dessen Ablauf das Verfahren nach einem der vorhergehenden Ansprüche angewendet wird, und dies zwischen einem Code (T1_code) eines Bildes (P1) einer zu identifizierenden Iris (I) und Codes (T2_Code) von Irisbildern (P2) aus einer Datenbasis (13), wobei basierend auf den erhaltenen Vertrauensbewertungszahlen die Irisbilder (P2) aus der Datenbasis (13) bestimmt werden, die von der zu identifizierenden Iris (I) stammen.

9. Identifikationsverfahren nach Anspruch 8, bei dem die erhaltenen Vertrauensbewertungszahlen mit einem Schwellwert verglichen werden, um die Irisbilder (P2) zu bestimmen, die von der zu identifizierenden Iris (I) stammen.

10. Identifikationsverfahren, das aus Folgendem besteht:

    - bestimmen eines Binärcodes für die Gleichartigkeit (Diff) zwischen einem Bild (P1) einer zu identifizierenden Iris (I) und jedem von N Irisbildern (P2) aus einer Datenbasis (13),
- Berechnen, für jeden Binärcode für die Gleichartigkeit (Diff), des Hammingabstands zwischen den beiden verglichenen Bildern,
- Auswählen aus der Datenbasis (13) von N Bildern einer zweiten Datenbasis von N' Irisbildern, die den geringsten Hammingabstand zu dem Bild (P1) der zu identifizierenden Iris (I) haben, und
- Anwenden des Verfahrens nach den Ansprüchen 8 oder 9 auf die Datenbasis, die die N' Irisbilder enthält.

**11.** System zur Identifikation einer Person, Folgendes umfassend:

- wenigstens ein Erfassungssystem (11), das dafür eingerichtet ist, wenigstens ein Bild (P1) einer Iris (I) einer Person (P) zu erfassen,
- eine Berechnungseinheit (12), die das vom Erfassungssystem (11) erfasste Bild (P1) empfängt sowie wenigstens ein zweites Bild (P2), das mit dem ersten (P1) verglichen werden soll,

wobei das System **dadurch gekennzeichnet ist, dass** die Berechnungseinheit (12) für Folgendes eingerichtet ist:

- Codieren des Bildes (P1) der zu identifizierenden Iris (I) und des zweiten Irisbildes (P2), um Binärcodes (T1_code, T2_code) zu erhalten, die die zu vergleichenden Bilder repräsentieren, und dies derart, dass benachbarte Bits der Binärcodes (T1_code, T2_code) benachbarten Bereichen der Iriden auf den entsprechenden Bildern (P1, P2) entsprechen,
- Bestimmen eines Binärcodes für die Gleichartigkeit (Sim) basierend auf dem Binärcode (T1_code) des Bildes (P1) der zu identifizierenden Iris (I) und dem zweiten Binärcode (T2_code) des zweiten Irisbildes (P2),
- Bestimmen einer Vertrauensbewertungszahl als Funktion von lokalen Dichten von Gleichartigkeiten (Dichte(b)) zwischen den beiden verglichenen Irisbildern (P1, P2), sowie des Binärcodes für die Gleichartigkeit (Sim), wobei die lokalen Dichten von Gleichartigkeiten selbst als Funktion des Binärcodes für die Gleichartigkeit (Sim) bestimmt werden,
- Entscheiden, als Funktion des Werts der Vertrauensbewertungszahl, ob die beiden Irisbilder (P1, P2) von derselben Iris stammen.

## Claims

**1.** An identification method from biometric data of an iris (I) of an eye to be identified, comprising the steps consisting of:

- encoding an image (P1) of the iris (I) to be identified and a second iris image (P2) to be compared to the first image (P1), to obtain binary codes (*T1_code, T2_code*) representative of the images to be compared, such that adjacent bits of the binary codes (*T1_code, T2_code*) correspond to adjacent zones of the irises on the corresponding images (P1, P2),
- determining a binary similarity code *(Sim)* from the binary code (*T1_code*) of the image (P1) of the iris (I) to be identified and of the second binary code *(T2_code)* of the second iris image (P2),
- determining a confidence score as a function of local densities of similarities (Density(b)) between the two compared irises images (P1, P2), as well as of the binary similarity code *(Sim),* the local densities of similarity themselves being determined as a function of the binary similarity code *(Sim),*
- deciding, as a function of the value of the confidence score, whether the two iris images (P1, P2) come from the same iris.

**2.** The identification method according to claim 1, wherein the similarity binary code (*Sim*) is a coherence map (*Diff*) obtained by applying the operator « exclusive or » between the two binary codes (*T1_code, T2_code*) representative of the iris images (P1, P2).

**3.** The identification method according to claim 2, wherein the binary similarity code (*Sim*) used takes into account only those bits of the coherence map (*Diff*) corresponding to zones of irises visible on the images (P1, P2).

**4.** The identification method according to one of the preceding claims, wherein to determine the confidence score a measurement of local density (Density(b)) of coherent bits between the two binary codes (*T1_code, T2_code*) of the iris images (P1, P2) in the vicinity of the relevant bit is calculated for each bit of the binary similarity code (*Sim*).

**5.** The identification method according to the preceding claim, wherein the confidence score is calculated by adding up, for each bit of the similarity code (*Sim*), the values of the local densities (Density(b)) weighted by a positive number if the bit is coherent between the two iris images (P1, P2), and a negative number if the bit is incoherent between the two iris images (P1, P2).

6. The identification method according to the preceding claim, wherein the confidence score is also standardised by dividing it by the sum of the local densities.

7. The identification method consisting of iterating the steps of the method as claimed in any one of the preceding claims between a code of an image of an iris to be identified and N codes of iris images from a database (13), and from the confidence scores obtained for each couple of codes of iris images, determining a success rate of the decision made relating to the origin of the images.

8. The identification method during which the method as claimed in any one of the preceding claims is applied between a code (*T1_code*) of an image (P1) of an iris (I) to be identified and codes (*T2_code*) of iris images (P2) from a database (13), and the iris images (P2) of the database (13) which originate from the iris (I) to be identified are determined from the confidence scores obtained.

9. The identification method according to claim 8 wherein a comparison is made of the confidence scores obtained with a threshold for determining the iris images (P2) which originate from the iris (I) to be identified.

10. The identification method consisting of:

   - determining a binary similarity code (*Diff*) between an image (P1) of an iris (I) to be identified and each of N iris images (P2) from a database (13),
   - calculating, for each binary similarity code (*Diff*), the Hamming distance between the two compared images,
   - selecting from the database (13) of N images a second database of N' images of irises having the smallest Hamming distance with the image (P1) of the iris (I) to be identified and,
   - executing the method according to claims 8 or 9 on the database containing the N' iris images.

11. An identification system of an individual, comprising:

   - at least one acquisition system (11), adapted to capture at least one image (P1) of an iris (I) of a person (P),
   - a calculation platform (12), receiving the image (P1) acquired by the acquisition system (11) and at least one second image (P2) to be compared to the first (P1),

   the system being **characterised in that** the calculation platform (12) is adapted for:

   - encoding the image (P1) of the iris (I) to be identified and the second iris image (P2) to obtain binary codes (*T1_code, T2_code*) representative of the images to be compared, such that adjacent bits of the binary codes (*T1_code, T2_code*) correspond to adjacent zones of the iris on the corresponding images (P1, P2)
   - determining a binary similarity code (*Sim*) from the binary code (*T1_code*) of the image (P1) of the iris (I) to be identified and of the second binary code (*T2_code*) of the second iris image (P2),
   - determining a confidence score as a function of local densities of similarities (Density(b)) between the two iris compared images (P1, P2), as well as of the binary similarity code (*Sim*), the local densities of similarity themselves being determined as a function of the binary similarity code (*Sim*),
   - deciding, as a function of the value of the confidence score, whether the two iris images (P1, P2) come from the same iris.

# FIG. 1

# FIG. 2

# FIG. 3

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 5291560 A

**Littérature non-brevet citée dans la description**

- **DAUGMAN.** *How Iris Recognition Works (IEEE Transactions on Circuits and Systems for Video Technology,* Janvier 2004, vol. 14 (1